# EUROPEAN PATENT APPLICATION

(11) **EP 4 528 116 A1**
(43) Date of publication of application: **26.03.2025**
(21) Application number: 24200899.3
(22) Date of filing: 17.09.2024
(51) Int. Cl.: F16B 37/12, E06B 1/60

(54) **SLEEVE AND FRAME FASTENER**

(30) Priority: 19.09.2023 EP 23198246
(71) Applicant: Illinois Tool Works Inc., Glenview IL 60025 (US)
(72) Inventor: FRIIS, Morten, Glenview, 60025 (US); NISSEN, Anders, Glenview, 60025 (US)
(74) Representative: HGF

(57) **Abstract**

A sleeve for receiving a screw to secure a frame, for example a window frame or a door frame, to a wall, comprising:
a threaded outer surface configured to screw into the frame; and
a through-channel defining a central axis of the sleeve, comprising a sloped portion that is angled relative to the central axis for central alignment of a screw when the screw is inserted into the through-channel of the sleeve.

## Description

### BACKGROUND

Fasteners are used to install a frame, such as a window frame or door frame, into a wall at one or more desired locations. An opening is typically provided in the wall, and the frame is secured within the opening to the wall. This provides lasting support for holding a window or door within the frame, allowing it to open and close relative to the wall.

One example of a fastener used to install a frame into a wall of a building is a frame fastener, which is also known as a frame screw. The frame fastener includes a sleeve with a threaded outer casing and a fixing in the form of a screw. The frame fastener is inserted into the frame and into the wall. The wall may be made of masonry, in particular brick, concrete, concrete blocks, stone, wood or another material. As a result, different fasteners are generally required depending on the material of the wall, to provide the desired physical properties to facilitate the installation of the frame to the wall, such as pull-out strength, hardness, wear-resistance and insertion torque, for example.

It would be desirable to provide a multi-purpose frame fastener that is suitable for insertion into different types of materials.

Another problem associated with known frame fasteners is an insufficient contact and fitting between the screw and the sleeve, resulting in a poor transfer of forces from the screw to the sleeve. This leads to a connection between the screw and sleeve that is loose, unstable, and leading to vibrations.

It would be desirable to provide a sleeve and frame fastener that provides an improved contact and transfer of forces between the screw and sleeve, leading to further improved pull-out strength, reduced vibrations, and improved connection and stability between the screw and the sleeve.

### SUMMARY OF THE INVENTION

In accordance with the present invention there is provided a sleeve and a frame fastener according to the appended claims.

According to an aspect of the present invention, there is provided a sleeve for receiving a screw to secure a frame, for example a window frame or a door frame, to a wall, comprising: a threaded outer surface configured to screw into the frame; and a through-channel defining a central axis of the sleeve, comprising a sloped portion that is angled relative to the central axis for central alignment of a screw when the screw is inserted into the through-channel of the sleeve.

By having a sleeve having a sloped portion angled relative to the central axis, the contact area between the sleeve and the screw when inserted is increased. This arrangement improves connection stability between the sleeve and screw, improves pull-out resistance and reduces vibrations.

In examples, the sloped portion of the through-channel is arranged in direct contact with the screw. In some examples, the sloped portion of the through-channel is arranged in direct contact with a head portion of the screw.

In examples, the through-channel comprises a screw abutment surface.

In examples, the screw abutment surface comprises a step for abutting a head flange of the screw.

In examples, the sloped portion is configured for abutting a head portion of the screw.

In examples, the sloped portion is arranged adjacent the screw abutment surface along the central axis of the sleeve. In some examples, the sloped portion is adjacent the screw abutment surface in a direction towards a head of the sleeve.

In examples, the sloped portion has a frustoconical shape.

In examples, the sloped portion tapers inwards in a direction from a tip to a head of the sleeve.

In examples, the sloped portion forms an angle relative to the central axis that is between 0 and 10 degrees. In some examples, the sloped portion forms an angle relative to the central axis that is between 1 and 2 degrees. In some examples, the sloped portion forms an angle relative to the central axis that is between 1.5 and 2 degrees. In specific examples, the sloped portion forms an angle relative to the central axis that is 1.75 degrees.

In examples, the sloped portion spans an axial length, along the central axis, of between 2.5 and 12mm. In some examples, the sloped portion spans an axial length, along the central axis, of between 4 and 8mm.

In examples, the sleeve spans a length of between 25 to 40 millimetres.

In examples, the sleeve comprises a head and an opposite tip.

In examples, the head of the sleeve comprises a stopper flange.

In examples, the stopper flange comprises circumferential teeth. The circumferential teeth may be circumferentially distributed around the stopper flange. The circumferential teeth may extend or protrude axially from the stopper flange towards the tip. The circumferential teeth may have a tip or a radial edge.

In examples, the stopper flange comprises radial ribs extending towards the tip. The radial ribs may be circumferentially distributed around the stopper flange. The radial ribs may extend or protrude axially from the stopper flange towards the tip. The radial ribs may have a radial edge.

In examples, the sleeve comprises reinforcement ribs arranged between the stopper flange and the threaded outer surface. The reinforcement ribs may extend or protrude radially from a tubular wall arranged between the stopper flange and the threaded outer surface. The reinforcement ribs may extend externally or internally from the tubular wall. The reinforcement ribs may be circumferentially distributed around the tubular wall.

According to another aspect of the present invention, there is provided a frame fastener for securing a frame, for example a window frame or a door frame, to a wall, comprising: a sleeve comprising a threaded outer surface configured to screw into the frame, and a through-channel defining a central axis of the sleeve, the through-channel comprising a sloped portion that is angled relative to the central axis; and a screw having a head and a tip at opposite ends, and a shaft extending between the head and the tip, wherein the screw is sized and shaped to abut the sloped portion such that screw extends through the through-channel in alignment with the central axis.

In examples, the sloped portion of the through-channel and the screw are in direct contact.

In examples, the sloped portion of the through-channel and a head portion of the screw are in direct contact.

In examples, the through-channel comprises a screw abutment surface.

In examples, the screw abutment surface comprises a step for abutting a head flange of the screw.

In examples, the sloped portion is configured for abutting a head portion of the screw.

In examples, the head portion of the screw comprises a sloped profile. In examples, the sloped profile has a frustoconical shape.

In examples, the sloped profile tapers inwards in a direction from the head to the tip of the screw.

According to another aspect of the present disclosure, there is provided a screw having a head and a tip at opposite ends, and a shaft extending between the head and the tip to define a central axis of the screw, wherein the head of the screw comprises a sloped portion that is angled relative to the central axis of the screw.

In examples, the sloped profile of the screw has a frustoconical shape.

In examples, the sloped profile tapers inwards in a direction from the head to the tip of the screw.

According to an aspect of the present disclosure, there is provided a frame fastener for securing a frame, for example a frame or a door frame, to a wall, comprising: a sleeve comprising a through-channel, a screw abutment surface, and a threaded outer surface configured to screw into the frame; and a screw having a head and a tip at opposite ends and a shaft extending between the head and the tip, wherein the head is sized to abut the screw abutment surface when the screw is inserted into the sleeve, wherein the shaft comprises a hardened cutting thread for screwing into masonry, and wherein the tip comprises a tapered portion having a cutting thread for screwing into wood.

Thus, the frame fastener is provided with a screw that can be inserted both into softer materials such as wood, and into harder materials such as masonry. Such a frame fastener is multi-purpose and suitable for different types of materials. Therefore, the frame fastener removes the need to use different frame fasteners each only suitable for a single material or type of material. The frame fastener can be used to fasten frames to different types of materials.

In examples, the hardened cutting thread is hardened by heat treatment. In examples, the hardened cutting thread is formed by thread rolling followed by heat treatment. The hardened cutting thread may be hardened by a quenching and tempering process. It may be hardened by case hardening, flame hardening, induction hardening, or laser hardening, for example. In examples, the whole screw is hardened to provide the hardened cutting thread. For example, the whole screw is hardened by heating the screw in an oven (e.g. to 900 degrees Celsius) and then cooling the screw. In examples, the hardness of the screw is dependent on one or more of the carbon content of the screw, the carbon content in the oven, and the temperature of the oven and the duration the screw is in the oven. In examples, the whole screw is hardened to a first degree and the hardened cutting thread is hardened to a greater degree.

In examples, the core hardness of the screw is between 425HV5 (Vickers hardness number of 425 at a load of 5kgf) and 475HV5 (Vickers hardness number of 425 at a load of 5kgf). In examples, the surface hardness of the hardened cutting thread is at least 650HV03 (Vickers hardness number of 650 at a load of 0.3kgf), for example between 650HV03 (Vickers hardness number of 650 at a load of 0.3kgf) and 750HV03 (Vickers hardness number of 750 at a load of 0.3kgf), for example about 650HV03 (Vickers hardness number of 650 at a load of 0.3kgf), for example about 750HV03 (Vickers hardness number of 750 at a load of 0.3kgf). Having a cutting thread with this degree of surface hardness is beneficial for screwing into harder materials such as masonry because it has a high resistance to wear. The hardened surface of the hardening cutting thread may have a thickness of between 0.15mm to 0.3mm. In examples, the hardness of the core of the screw is dependent on one or more of the carbon content in the oven, the duration the screw is in the oven, and the temperature of the oven.

In examples, the Vickers hardness test is performed on a flat surface. Therefore, a cut is made through a section of the screw where a hardness needs to be measured, and the tip of the indenter is positioned inside of the edge. This may be 0.1mm from the edge.

As will be known to a skilled person, a Vickers hardness test involves determining a hardness of a test material by measuring the size of an indent produced under load by a pyramid-shaped diamond indenter, having opposing sides that meet at an apex at an angle of 136°. The diamond indenter is pressed into the surface of the test material at a known load (measured in kgf) and the size of the impression is determined. The size of the impression may be measured using the diagonal length of the impression. The Vickers hardness (HV value) is then calculated using the formula, HV = 1.854(F/d²), where F is the applied load in kilograms-force, and d is the diagonal length of the indent in millimetres).

In examples, the cutting thread is configured for splitting wood fibres.

In examples, a thread angle of the cutting thread is less than a thread angle of the hardened cutting thread with respect to a longitudinal axis of the screw.

In examples, a thread angle of the cutting thread with respect to a longitudinal axis of the screw is in a range of 5 degrees to 45 degrees.

In examples, a thread angle of the hardened cutting thread with respect to a longitudinal axis of the screw is in a range of 45 degrees to 85 degrees.

In examples, the screw is made of a material comprising steel. In examples, the screw is made of stainless steel.

In examples, the screw abutment surface limits the movement of the head in an axial direction of the screw. In examples, the screw abutment surface is a stepped surface. In examples, the screw abutment surface is a flange. In examples, the sleeve comprises two screw abutment surfaces to limit the movement of the head of the screw between the screw abutment surfaces. In examples, the two screw abutment surfaces are stepped surfaces. In examples, the screw abutment surfaces are flanges.

In examples, the hardened cutting thread is configured to screw into a pilot hole in the masonry, and wherein the maximum diameter of the cutting thread is less than the diameter of the pilot hole. This is advantageous because the portion of the screw with the cutting thread is inserted directly into the pilot hole without the cutting thread contacting the edges of the pilot hole, and the hardened cutting thread engages the edge of the pilot hole.

In examples, the hardened cutting thread extends over the tapered portion of the tip.

In examples, the cutting thread spans the length of the tapered portion of the tip.

In examples, the cutting thread extends over the shaft of the screw.

In examples, the screw abutment surface is a stepped surface between the ends of the sleeve. In examples, the stepped surface is between a first channel region and a second channel region, the first channel region being wider than the second channel region. In examples, the stepped surface is a flange.

In examples, the second channel region is arranged to receive a cylindrical part of the screw. The provision of a second channel region arranged to receive a cylindrical part of the screw is particularly advantageous because the engagement and therefore axial alignment of the screw with the sleeve is increased, providing the frame fastener with improved structural rigidity and stability. The cylindrical part of the screw may be part of the screw that has no threads. The cylindrical part may have a smooth surface.

In examples, the cylindrical part of the screw is between the head and the shaft of the screw. In examples the cylindrical part of the screw is sized to correspond with the second channel region. This is advantageous because this further improves the axial alignment of the screw with the sleeve. In examples, the cylindrical part and the second channel region have the same axial length.

In examples, the hardened cutting thread of the shaft comprises at least one notch. The provision of at least one notch is advantageous because dust generated from the insertion of the screw is trapped in the notch, reducing the amount of dust present in the surrounding area and improving the fixing of the screw into the wall. In examples, the notch is a cutting notch. In examples, the notch is a dust accumulating notch. Advantageously, when the screw is used in masonry, dust may accumulate in the notch and be compressed, increasing the anchoring of the screw in the masonry.

In examples, the thread of the shaft comprises a plurality of notches. In examples, the plurality of notches are linearly spaced from each other along adjacent turns of the thread.

In examples, the sleeve comprises a tool-engaging portion for rotating the sleeve using a tool to adjust an axial position of the sleeve. In examples, the tool-engaging portion is a hex socket. In examples, the sleeve comprises tool-engaging portions at both ends of the sleeve.

According to another aspect of the present disclosure, there is provided a screw for a frame fastener for securing a frame. The screw comprises a head and a tip at opposite ends, and a shaft extending between the head and the tip, wherein the head is sized to abut the screw abutment surface when the screw is inserted into the through-channel of the sleeve, and wherein the shaft comprises a hardened cutting thread for screwing into masonry, and wherein the tip comprises a tapered portion having a cutting thread for screwing into wood.

### BRIEF DESCRIPTION OF THE DRAWINGS

Embodiments of the invention are now described, by way of example only, hereinafter with reference to the accompanying drawings.
FIG. 1 shows a perspective view of a sleeve of a frame fastener with a portion of the sleeve removed to show the inside of the sleeve.
FIG. 2 shows a perspective view of a screw of a frame fastener.
FIG. 3A shows a perspective view of a frame fastener including a sleeve and a screw.
FIG. 3B shows a side view of the frame fastener of FIG. 3A, with a portion of the sleeve removed to show the inside of the sleeve.
FIG. 4 shows a schematic illustration of a frame fastener in use to secure a frame to a wall.
FIG. 5 shows a side view of a frame fastener, with a portion of the sleeve removed to show the inside of the sleeve.
FIG. 6A shows a perspective view of a sleeve of a frame fastener according to another example.
FIG. 6B shows a side section view of the sleeve of FIG. 6A.
FIG. 7A shows a perspective view of a screw of a frame fastener according to another example.
FIG. 7B shows a side section view of the screw of FIG. 7A, showing the side of the screw including the head.
FIG. 8A shows a perspective view of a frame fastener including the sleeve of FIG. 6, and the screw of FIG. 7.
FIG. 8B shows a side section view of the frame fastener of FIG. 8A.

### DETAILED DESCRIPTION

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words `inner', `inwardly', `outer' and 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled' and 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, "first", "second" and "third" etc. merely indicate that different instances of like objects are being referred to and are not intended to imply that the objects so described must be in a given sequence, either temporally, spatially, in ranking or in any other manner.

Like reference numerals are used to depict like features throughout.

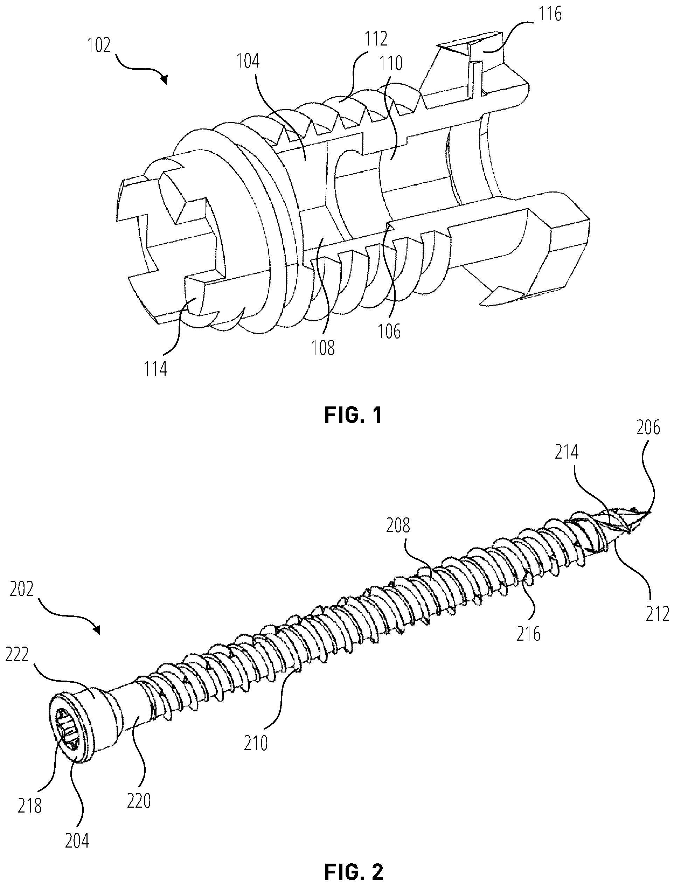

Referring now to FIG. 1, there is shown a sleeve 102. The sleeve 102 includes a through-channel 104, a screw abutment surface 106, and a threaded outer surface 112. The through-channel 104 is an opening that extends through the length of the sleeve 102. The screw abutment surface 106 is provided within the through-channel 104, partitioning the through-channel 104 into two regions having different diameters. In particular, the screw abutment surface 106 is provided as a stepped surface between a first channel region 108 and a second channel region 110. The first channel region 108 is larger in diameter (i.e. wider) than the second channel region 110. The threaded outer surface 112 is provided on an external outer surface of the sleeve 102. A proximal end of the sleeve 102 is provided with a tool-engaging portion 114. The tool-engaging portion 114 may include an internal hex socket for engaging a hex key. In this example, the tool-engaging portion 114 may additionally or alternatively include castellations for engaging a tip of a screwdriver. A distal end of the sleeve 102 is provided with a stopper flange 116 having a diameter which is larger than the diameter of the threaded outer surface 112. It is envisaged that the tool-engaging portion 114 may be internal of the sleeve 102 and/or external of the sleeve 102. It is also envisaged that tool-engaging portions 114 may be included at both ends of the sleeve 102. One of the tool-engaging portions 114 may be internal, and another of the tool-engaging portions 114 may be external. Any of the tool-engaging portions 114 may be used to engage and screw the sleeve 102, for example using a hex key or a screwdriver.

FIG. 2 shows a screw 202. The screw 202 has a head 204 arranged at a proximal end and a tip 206 arranged at a distal end. The head 204 of the screw 202 is provided with a recessed surface 218 for engagement of a screwdriver or tool. In other examples the head 204 of the screw 202 may include a different form of tool engaging socket or external shape, for example a hexagonal profile for a socket tool. Extending between the head 204 and the tip 206 is a shaft 208. The shaft 208 includes a hardened cutting thread 210. The hardened cutting thread 210 includes a plurality of threads that are hardened, for example by a heat treatment process. The hardened cutting thread 210 may be formed by a thread rolling process followed by heat treatment. The whole screw may be hardened to provide the hardened cutting thread, or the whole screw may be hardened to a first degree and the hardened cutting thread may be hardened to a greater degree. In this example, the hardened cutting thread 210 extends over a tapered portion 212 of the tip 206. The hardened cutting thread 210 includes a plurality of notches 216 that trap and compress dust when screwing into masonry to increase fixation. The notches 216 are linearly spaced from each other along adjacent turns of the thread. In this example, the screw 202 is made of steel, in particular stainless steel. In this particle example, the core hardness of the screw 202 is 450HV5 (Vickers hardness number of 450 at a load of 5kgf). Also, in this particular example, the surface hardness of the hardened cutting thread 210 is 700HV03 (Vickers hardness number of 700 at a load of 0.3kgf). Having a cutting thread with a hardened surface is particularly beneficial for screwing into harder materials such as masonry because it has a high resistance to wear.

The tip 206 of the screw 202 has a tapered portion 212 provided with a cutting thread 214. The tapered portion 212 is tapered in shape from the shaft 208 to the tip 206 of the screw 202. The cutting thread 214 spans the length of the tapered portion 212. In this example, the cutting thread 214 extends over a portion of the shaft 208 of the screw 202. The screw 202 has a cylindrical part 222 which is arranged between the head 204 and the shaft 208, and a shank 220 which is arranged between the cylindrical part 222 and the shaft 208.

The thread angle of the cutting thread 214 is less than the thread angle of the hardened cutting thread 210, each thread angle being measured with respect to a longitudinal axis of the screw 202. The thread angle of the cutting thread 214 is adapted for wood fibre splitting. The thread angle of the of the hardened cutting thread 210 is adapted to screw into masonry and also into wood after splitting of the wood fibres. The thread angle of the cutting thread 214 may be in the range of 5 degrees to 45 degrees. Other ranges of thread angle of the cutting thread 214 are envisaged, for example: 10 to 35 degrees; 15 to 30 degrees; 15 to 20 degrees; and 16 to 18 degrees. In this particular example, the thread angle of the cutting thread 214 is 17 degrees. The thread angle of the hardened cutting thread 210 may be in the range of 45 degrees to 85 degrees. Other ranges of the thread angle of the hardened cutting thread 210 are envisaged, for example: 55 to 85 degrees; 60 to 80 degrees; 70 to 80 degrees; and 72 to 78 degrees. In this particular example, the thread angle of the hardened cutting thread 210 is 75 degrees. Other thread angles of the cutting thread 214 and hardened cutting thread 210 are envisaged.

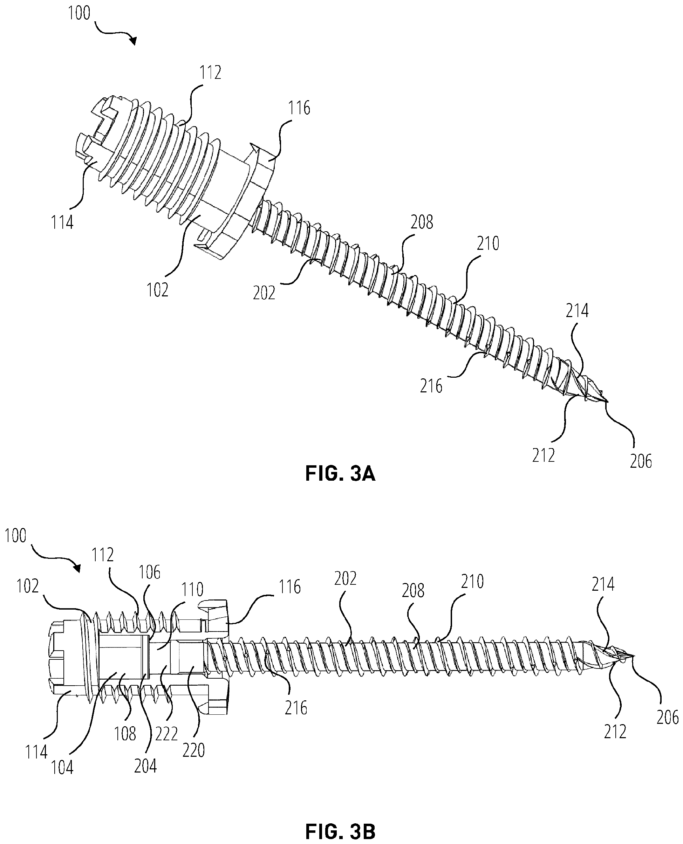

FIG. 3A and FIG. 3B show a frame fastener 100 which includes the sleeve 102 and screw 202 as previously described. As best seen in FIG. 3B, when assembled, the screw 202 is inserted into the through-channel 104 of the sleeve 102 in a direction from the proximal end (i.e. tool-engaging portion 114 side) to the distal end (i.e. stopper flange 116 side). The head 204 of the screw 202 is sized such that it abuts the screw abutment surface 106 of the sleeve 102 upon insertion of the screw 202 into the sleeve 102. The screw abutment surface 106 limits the movement of the screw 202 in the axial direction. When the head 204 of the screw 202 abuts against the screw abutment surface 106, the cylindrical part 222 of the screw 202 is received in the second channel region 110 of the through-channel 104, which increases the engagement and the axial alignment of the screw 202 with the sleeve 102 and, in turn, improves the structural rigidity and stability of the frame fastener 100. In this example, the cylindrical part 222 of the screw 202 has an axial length that corresponds with the axial length of the second channel region 110.

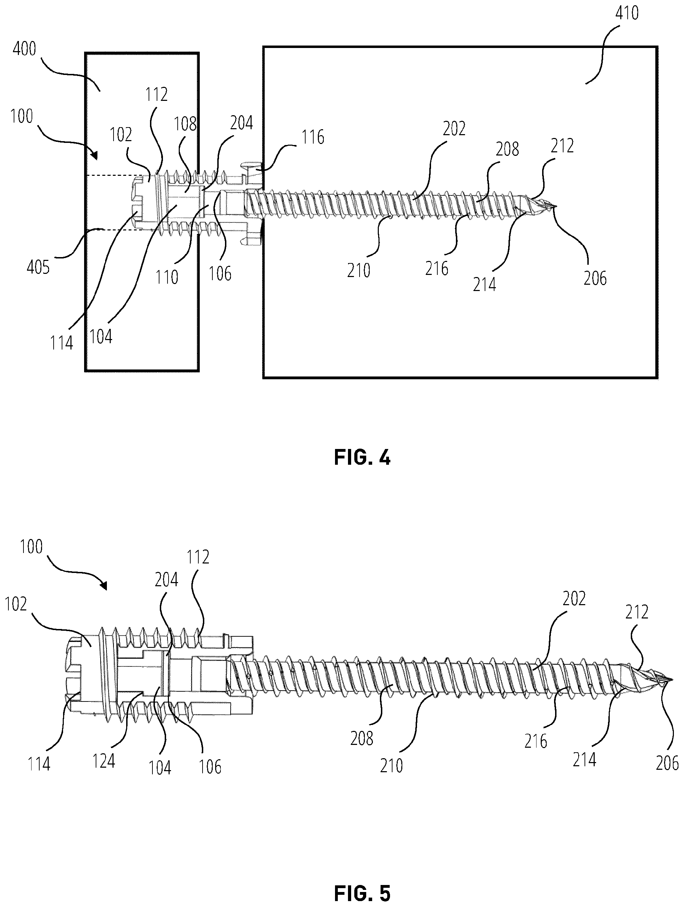

The use of the frame fastener 100 will now be described with reference to FIG. 4. The frame fastener 100 is used to secure a frame 400 to a wall 410. In this example, the frame 400 is a window frame. However, other frames are envisaged, for example the frame 400 may be a door frame.

In use, to secure a frame 400 to an opening in a wall 410, a hole 405 is drilled into the frame 400, and the sleeve 102 is inserted into the hole 405 from the outside (wall 410 side) before the frame 400 is placed into the opening of the wall 410. The sleeve 102 is screwed all the way into the frame 400 until the stopper flange 116 abuts the surface of the frame 400. The frame 400, with the sleeve 102 inserted inside, is positioned in the wall 410 opening. The sleeve 102 is then unscrewed from the inside until the stopper flange 116 abuts the surface of the wall 410. This holds the frame 400 in place relative to the wall 410. This process is repeated to secure the frame 400 to the wall 410 at different locations, and a check can be made to ensure that the frame 400 is level with the wall 410 and properly positioned. Once the frame 400 is positioned properly, the screw 202 is inserted through the hole 405 in the frame 400 and through the sleeve 102 into the wall 410, to secure the frame fastener 100 together. An adjustment in the distance between the frame 400 and the wall 410 can later be made by loosening the screw 202, rotating the sleeve 102 in a direction depending on whether the sleeve 102 needs to be tightened or loosened, and then retightening the screw 202.

The frame fastener 100, in particular the screw 202, can be used with different types of materials, for example softer materials such as wood, and harder materials such as masonry. Accordingly, the same frame fastener 100 can be used for openings with wood and/or masonry openings.

The screw 202 may be inserted into a wall 410 made of a softer material such as wood. The cutting thread 214 provided on the tapered portion 212 of the tip 206 cuts into the wall 410 to create an opening for inserting the frame fastener 100. As the screw 202 of the frame fastener 100 is inserted further, the hardened cutting thread 210 of the screw 202 engages with the edge of the opening in the wall 410 to secure the screw 202 to the wall 410. In examples where the wall 410 is made of wood, the cutting thread 214 may split the wood fibres in the wall 410 and the hardened cutting thread 210 can screw into the wood to secure it.

The screw 202 may be inserted into a wall 410 made of a harder material such as concrete or other masonry. The wall 410 may include a pilot (i.e. pre-drilled) hole. The pilot hole may have a maximum diameter which is less than the diameter of the cutting thread 214. When the screw 202 is inserted into the wall 410, the tip 206 enters the wall 410 without contacting the edge of the pilot hole. When the shaft 208 of the screw 202 is inserted into the wall 410, the hardened cutting thread 210 engages with the edge of the pilot hole, to secure the screw 202 with the wall 410.

Therefore, the frame fastener 100 can be inserted both into walls made of a softer material such as wood, and made of a harder material such as masonry. The frame fastener 100 is multi-purpose and suitable for different types of materials, removing the need to use different frame fasteners each only suitable for a single material or type of material.

FIG. 5 shows an example of a frame fastener 100 with a sleeve 102 that is modified from the example previously described. The other aspects of the frame fastener 100 are the same so will not be described again here. In this example, instead of a single screw abutment surface 106, the through-channel 104 of the sleeve 102 is provided with two screw abutment surfaces 106, 124. In this way, the two screw abutment surfaces 106, 124 limit the movement of the screw 202 within the sleeve 102. This traps the screw 202 within a predetermined region within the sleeve 102 defined by the two screw abutment surfaces 106, 124 of the through-channel 104. The screw 202 can freely rotate within the sleeve 102. The second screw abutment surface 124 may be a stepped surface towards the tool-engaging portion 114. Each of the screw abutment surfaces 106, 124 may be a stepped surface.

In use, the frame fastener 100 including both the sleeve 102 and the screw 202 is inserted into the hole 405 of the frame 400 and into the wall 410 from the inside. The screw 202 is screwed into the wall 410 while the sleeve 102 is rotated at the same time to screw into the frame 400, for example using a tool that simultaneously engages a hex socket in the sleeve 102 and a recessed surface 218 in the screw 202. To adjust the spacing between the frame 400 and the wall 410, the sleeve 102 can be screwed to be tightened or loosened, for example using a hex key to rotate the sleeve 102 independently from the screw 202. This moves the sleeve 102 relative to the screw 202, and therefore moves the frame 400 towards and away from the wall 410.

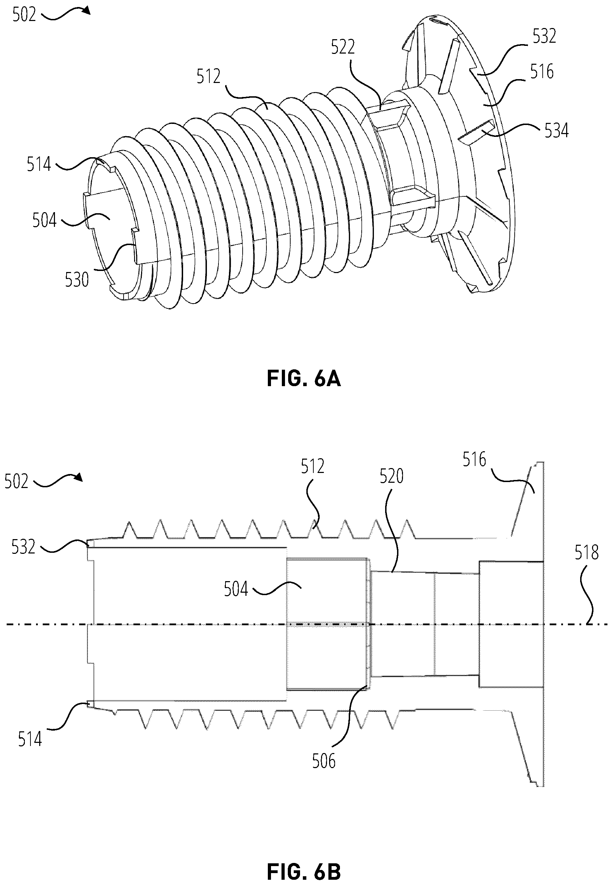

FIG. 6A and FIG. 6B show another example of a sleeve 502 including a through-channel 504 defining a central axis 518, a screw abutment surface 506, and a threaded outer surface 512. The through-channel 504 is an opening that extends through the length of the sleeve 502 between a head of the sleeve 502 and an opposite tip. Unlike the sleeve 102 described in FIG. 1, the through-channel 504 includes a sloped portion 520 that is angled relative to the central axis 518.

In this example, the angle formed between the sloped portion 520 and central axis 518 is 1.75 degrees, although other angles are envisaged, for example between 0 (excluded) and 10 (included) degrees, between 1 and 2 degrees (included), or between 1.5 and 2 degrees (included). The sloped portion 520 is arranged adjacent the screw abutment surface 506 along the central axis 518, in particular in a direction towards a head of the sleeve 502. The sloped portion 520 tapers inwards in a direction from the tip to the head of the sleeve 502. In this example, the sloped portion 520 has a frustoconical shape. In this example, the sloped portion 520 spans an axial length, along the central axis 518, of between 2.5 and 12mm (included), or between 4 and 8mm (included).

The threaded outer surface 512 is provided on an external outer surface of the sleeve 502. A proximal end (i.e. tip) of the sleeve 502 is provided with a tool-engaging portion 514. The proximal end of the sleeve 502 is also provided with cutting tips 530 which help the sleeve 502 cut into an installation hole. A distal end (i.e. head) of the sleeve 502 is provided with a stopper flange 516 having a diameter which is larger than the diameter of the threaded outer surface 512. The perimeter of the stopper flange 516 is provided with circumferential teeth 532 and radial ribs 534 that facilitate a flush installation and reduce splitting. The circumferential teeth 532 and radial ribs 534 extend or protrude axially from the stopper flange 516 towards the tip of sleeve 502. The circumferential teeth 532 may have a sharp tip. The radial ribs 534 may have a sharp radial edge. Arranged between the stopper flange 516 and the threaded outer surface 512 is a number of reinforcement ribs 522 improve the strength and stiffness of the sleeve 502. The reinforcement ribs 522 extend or protrude radially from a tubular wall arranged between the stopper flange 516 and the threaded outer surface 512. In this example, the reinforcement ribs 522 extend externally from the tubular wall although they could extend internally from the tubular wall. The reinforcement ribs 522 makes it possible to save material without compromising the strength of the sleeve 502.

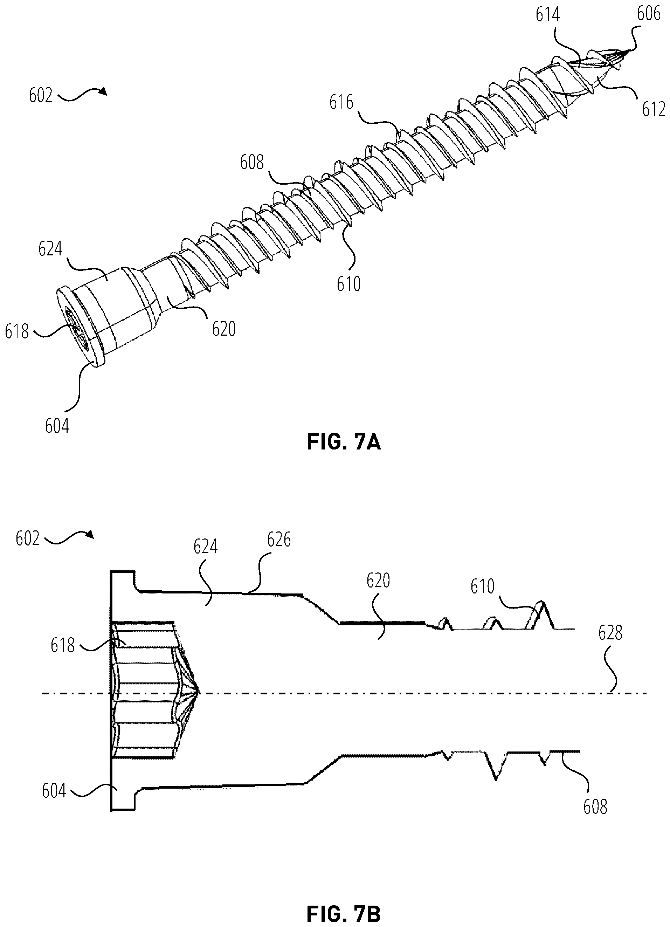

FIG. 7A and FIG. 7B show another example of a screw 602 having a tip 606, shaft 608, hardened cutting thread 610, tapered portion 612, cutting thread 614, notches 616, recessed surface 618, shank 620 that are the same as that of the screw 202 in FIG. 2. The screw 602 has a head and a tip 606 at opposite ends, and a shaft 608 extending between the head and the tip 606. The head in this example includes a flange 604 and a head portion 624 extending from the flange 604 in a direction towards the tip 606. In FIG. 7A and FIG. 7B, the cylindrical part 222 of the screw of FIG. 2 is replaced by a head portion 624 having a sloped profile 626. The sloped profile 626 tapers inwards in a direction from the head to the tip 606 of the screw 602. In this example, the angle formed between the sloped profile 626 and a central axis 628 of the screw 602 is 1.75 degrees, although other angles are envisaged, for example between 0 (excluded) and 10 (included) degrees, between 1 and 2 degrees (included), or between 1.5 and 2 degrees (included). The head portion 624 in this example has a frustoconical shape 630.

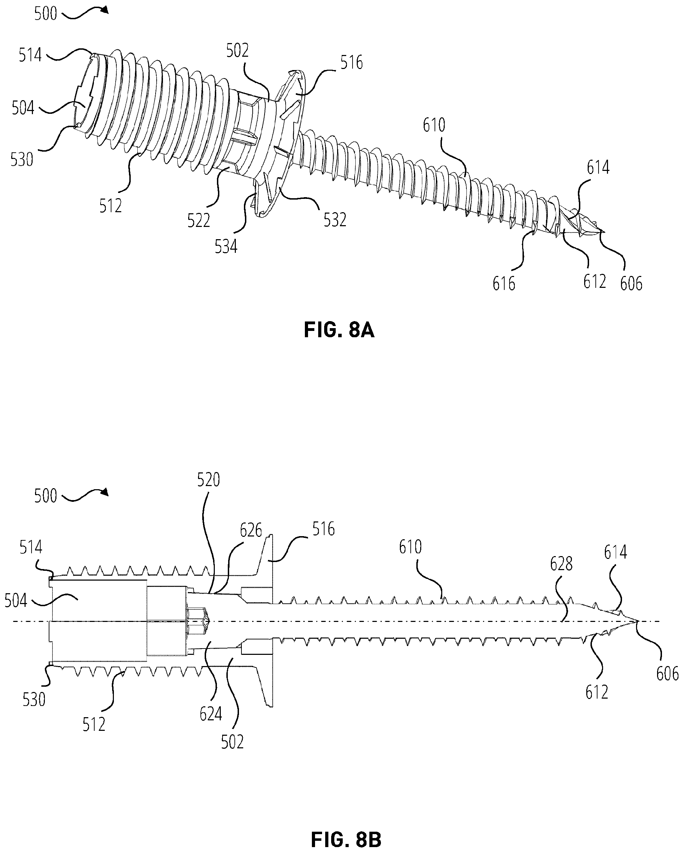

FIG. 8A and FIG. 8B show a frame fastener 500 including the sleeve 502 of FIG. 7 and the screw 602 of FIG. 8. During assembly, the screw 602 is inserted into the through-channel 504 of the sleeve 502 from the proximal end having the tool-engaging portion 514 towards the distal end having the stopper flange 516. The head portion 624 of the screw 602 enters the sloped portion 520 of the screw 602, causing the movement of the screw 602 to be limited in the axial direction, and to further improve contact and axial alignment of the screw 602 within the sleeve 502. This is particularly beneficial because the increased contact area between the sleeve 502 and the screw 602 reduces vibrations and relative movement therebetween. It also improves the transfer of forces between the sleeve 502 and the screw 602, improving pull-out resistance, strength and stability. The sloped contact is provided directly between the sleeve 502 and the screw 602, meaning that no additional components are required for centering the screw 602. It is envisaged that the sleeve 502 may include a screw abutment surface 506 (see FIG. 6B) to further restrict the movement of the screw 602. It is to be appreciated that the screw abutment surface could be formed by a step for abutting the flange of the screw 602 head, or the head portion 624 could abut against the sloped portion 520 for the sleeve 502 to engage the screw 602. The sleeve 502 is further strengthened by the reinforcement ribs 522 provided between the threaded outer surface 512 and the stopper flange 516. The circumferential teeth 532 and radial ribs 534 provided on the stopper flange 516 facilitate a flush installation into the surface to be installed and reduce splitting.

It will be appreciated by persons skilled in the art that the above detailed examples have been described by way of example only and not in any limitative sense, and that various alterations and modifications are possible without departing from the scope of the invention as defined by the appended claims. Various modifications to the detailed examples described above are possible.

Through the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract or drawings), or to any novel one, or any novel combination, of the steps of any method or process so disclosed.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible.

## Claims

1. A sleeve for receiving a screw to secure a frame, for example a window frame or a door frame, to a wall, comprising:
a threaded outer surface configured to screw into the frame; and
a through-channel defining a central axis of the sleeve, comprising a sloped portion that is angled relative to the central axis for central alignment of a screw when the screw is inserted into the through-channel of the sleeve.

2. A sleeve according to claim 1, wherein the sloped portion of the through-channel is arranged in direct contact with the screw.

3. A sleeve according to claim 2, wherein the sloped portion of the through-channel is arranged in direct contact with a head portion of the screw.

4. A sleeve according to any preceding claim, wherein the through-channel comprises a screw abutment surface that comprises a step for abutting a head flange of the screw.

5. A sleeve according to any preceding claim, wherein the through-channel comprises a screw abutment surface, and wherein the sloped portion is arranged adjacent the screw abutment surface along the central axis of the sleeve.

6. A sleeve according to claim 5, wherein the sloped portion is adjacent the screw abutment surface in a direction towards a head of the sleeve.

7. A sleeve according to any preceding claim, wherein the sloped portion has a frustoconical shape.

8. A sleeve according any preceding claim, wherein the sloped portion tapers inwards in a direction from a tip to a head of the sleeve.

9. A sleeve according to any preceding claim, wherein the sloped portion forms an angle relative to the central axis that is between 0 and 10 degrees, optionally between 1 and 2 degrees, and further optionally between 1.5 and 2 degrees.

10. A sleeve according to any preceding claim, wherein the sloped portion spans an axial length, along the central axis, of between 2.5 and 12 millimetres, and optionally between 4 and 8 millimetres.

11. A sleeve according to any preceding claim, further comprising a head and an opposite tip, wherein the head comprises a stopper flange with circumferential teeth and/or radial ribs extending towards the tip.

12. A sleeve according to any preceding claim, further comprising a stopper flange and reinforcements ribs arranged between the stopper flange and the threaded outer surface.

13. A frame fastener for securing a frame, for example a window frame or a door frame, to a wall, comprising:
a sleeve comprising a threaded outer surface configured to screw into the frame, and a through-channel defining a central axis of the sleeve, the through-channel comprising a sloped portion that is angled relative to the central axis; and
a screw having a head and a tip at opposite ends, and a shaft extending between the head and the tip, wherein the screw is sized and shaped to abut the sloped portion such that screw extends through the through-channel in alignment with the central axis.

14. A frame fastener according to claim 11, wherein the sloped portion of the through-channel and the screw are in direct contact, and preferably wherein the sloped portion of the through-channel and a head portion of the screw are in direct contact.

15. A frame fastener according to claim 13, wherein the head portion of the screw comprises a sloped profile, and preferably wherein the sloped profile has a frustoconical shape, and more preferably wherein the sloped profile tapers inwards in a direction from the head to the tip of the screw.
